(19) Europäisches Patentamt
European Patent Office
Office européen des brevets

(11) Veröffentlichungsnummer: **0 303 555 B1**

(12) **EUROPÄISCHE PATENTSCHRIFT**

(45) Veröffentlichungstag der Patentschrift: **15.06.94**

(51) Int. Cl.5: **C07F 9/09**, C07F 15/02, C07F 13/00, A61K 31/66

(21) Anmeldenummer: **88710021.2**

(22) Anmeldetag: **11.08.88**

# (54) Herstellung eines Metallchelats der Ethanolaminophosphorsäure und Arzneimittel.

(30) Priorität: **11.08.87 DE 3726721**

(43) Veröffentlichungstag der Anmeldung:
**15.02.89 Patentblatt 89/07**

(45) Bekanntmachung des Hinweises auf die Patenterteilung:
**15.06.94 Patentblatt 94/24**

(84) Benannte Vertragsstaaten:
**AT BE CH DE ES FR GB LI NL**

(56) Entgegenhaltungen:
**DE-A- 930 566**
**LU-A- 43 839**

**ANALUSIS, Band 1, Nr. 7, Dezember 1972; M. WOZNIAK et al.: "Complexes du cuivre(II) avec l'acide amino-3 propylphosphonique et la O-phosphoéthanolamine"**

**Rote Liste, 1985, Kennziffer 61004**

(73) Patentinhaber: **Dr. Franz Köhler Chemie GmbH**
**Neue Bergstrasse 3 - 7**
**D-64665 Alsbach-Hähnlein(DE)**

(72) Erfinder: **Koehler Gernot F. Dr.**
**Neue Bergstrasse 3-7**
**D-6146 Alsbach-Hähnlein 1(DE)**

(74) Vertreter: **Zinngrebe, Horst, Dr.rer.nat.**
**Saalbaustrasse 11**
**D-64283 Darmstadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung eines Metall-Chelats der Ethanolaminophosphorsäure mit der Strukturformel

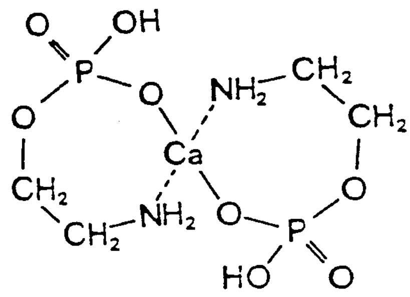

in welcher Me das Kation eines Erdalkali- oder Übergangsmetalls bezeichnet, ausgewählt aus der Gruppe Kalzium, Magnesium, Zink, Kupfer, Eisen und Mangan.

Die therapeutische Wirksamkeit des Kalziumchelats der Ethanolaminophosphorsäure (Ca-EAP®) ist beispielsweise aus dem Dokument ROTE LISTE, 1985, Kennziffer 61004 bekannt. Danach wird dieses Chelat eingesetzt bei der oralen und parenteralen Kalziumtherapie, bei Gastropathien, sowie bei der Duodenitis. Die diabetogene Neuropathie ist eine häufige Folgeerscheinung des Diabetes mellitus; es handelt sich dabei in der Regel um verminderte Sehfähigkeit, Beeinträchtigung des Bewegungsablaufs und cerebrale Retardierung.

Die pathologisch-anatomischen Veränderungen bei ca. 50 % der Diabetiker, welche zu einer Neuropathie neigen, sind vielfältig und heterogen. So liegt häufig eine Störung der Axone der motorischen Vorderhornzellen vor, wodurch die quergestreifte Skelettmuskulatur nicht ausreichend inerviert werden kann. Die Folge hiervon sind erhebliche Beeinträchtigungen des Bewegungsapparates aufgrund neurogener Muskelatrophie.

Bekannte Spätfolge der Diabetes mellitus ist die diabetische Mikroangiopathie, eine spezifische Form von Durchblutungsstörungen, die zum Verlust der Extremitäten führen kann. Dabei handelt es sich um eine Degeneration von Spinalganglienzellen und einer Hinterstrangdegeneration mit der Folge von Zirkulationsstörungen und vaskulären Läsionen. Die Angiopathie dürfte bei den akut auftretenden Monoparasen und Neuromyopathien, nicht aber bei primären Veränderungen der Satellitenzellen und Vorderhorn- und Spinalganglienzellen eine Rolle spielen, denn die diffusen Neuropathien können sich unabhängig von Angiopathien, Nephropathien und Retinopathien entwickeln. Anhand von Tierversuchen nach exzessiver Insulin-Dosis konnte reproduzierend Veränderungen im Gehirn und Rückenmark sowie Degeneration der Vorderhorn- und Spinalganglienzellen nachgewiesen werden und ein eindeutiger Zusammenhang mit den Neuropathien festgestellt werden.

Daraus lassen sich ebenso Indikationen für andere Neuropathien ableiten, deren Genese zwar unterschiedlich sind, die klinischen Bilder sind jedoch auf die gleichen pathologisch-anatomischen Veränderungen zurückzuführen. Polyneuropathien nach längerem Alkoholabusus beruhen ebenso wie Neuropathien durch Langzeittherapie mit Zytostatika auf den gleichen Pathomechanismen, wie die diabetogene Neuropathie. Ebenso werden bei Carcinomen, insbesondere bei Bronchialcarcinom, Polyneuropathien häufig beobachtet. Auch hierbei handelt es sich nach Denny-Brown (J. Neurol. Neurol. Surg. Psychiat. 11 (1984), 73) um eine Degeneration der Spinalganglienzellen.

Dysglobulinämische Neuropathien äußern sich in der quantitativen Verschiebung der Serumglobuline und dem Auftreten abnormer Makro- und Kryoglobulinen (Paraproteinämie). Sie sind begleitet von diffusen oder diseminierten Neuropathien. Außer der Makroglobulinämie Waldenström sieht man ähnliche Veränderungen bei Retikulosen, bei der Periarteriitis nodosa, beim Viszeralen Lupus Erythematodes, beim Reiter-Syndrom, bei der Thrombotischen Mikroangiopathie, bei der Primär-chronischen Polyarthritis mit abnormen Globulinen im Serum, bei malignen Tumoren und Leukämien, beim Multiplen Myolom und bei der Leberzirrhose.

Die bisherigen klinischen Erfahrungen mit dem Wirkstoff Calcium-2-aminoethyl-phosphat bei MS-Patienten lassen ebenso den Schluß zu, daß die therapeutische Wirkung auf die Wiederherstellung der entmarkten Axone beruht. Die Remyelinisierung verbessert die Reizleitung, sofern die Ranvier-Schnürringe den Impuls weiterzuleiten in der Lage sind. Die Myelinscheide ist im Aufbau und Funktion mit einem Kondensator vergleichbar, der sich bei einem Reiz entlädt und den Impuls zur nächsten Schaltstelle

(Ranvier-Knoten) weiterleiter. So setzt sich der Impuls über mehrere Schaltstellen und mehrere Myelinscheidensegmente fort, bis er schließlich das Erfolgsorgan inerviert.

Die Erfindung soll einen Wirkstoff für ein pharmazeutisches Präparat zur prophylaktischen oder therapeutischen Behandlung der erwähnten Neuropathien bereitstellen, dessen Verabreichung bei Einhaltung der vorgeschriebenen Dosis keine Nebenwirkungen zur Folge hat.

Der erfindungsgemäße Wirkstoff kann aus einer Stoffgruppe gewählt werden, die als ein Metallchelat der Ethanolaminophosphorsäure bezeichnet werden kann und folgende Strukturformel besitzt:

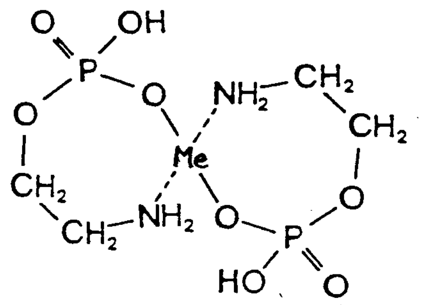

in welcher Me das Kation eines Erdalkali- oder Übergangsmetalls bezeichnet, ausgewählt aus der Gruppe Calcium, Magnesium, Zink, Kupfer, Eisen und Mangan. Das erfindungsgemäße Verfahren zur Herstellung dieser Metallchelate sieht vor, daß man 2-Hydroxyethylamin mit einem Überschuß an Polyphosphorsäure vermischt, das Gemisch langsam auf 100 °C über mehrere Stunden erhitzt, einer alkalischen Lösung des gewonnenen Esters das Metallhydroxyd zusetzt und auf pH = 10 einstellt, anschließend Kohlendyoxid einleitet und das Metallcarbonat bzw. Metallphosphat filtriert.

Bevorzugt wird als Metallhydroxyd Calciumhydroxyd eingesetzt und Calciumcarbonat bzw. Calciumphosphat filtriert und das Calciumchelat mit Ethanol aus dem Filtrat ausgefällt. Alternativ kann es zweckmäßig sein, als Metallhydroxyd Magnesiumhydroxid einzusetzen und Magnesiumcarbonat bzw. Magnesiumphosphat zu filtrieren und das Magnesiumchelat mit Ethanol aus dem Filtrat auszufällen.

Die hier beschriebenen Wirkstoffe reparieren die Myelinscheide in der Weise, daß seine Kondensatorwirkung wieder die volle Funktion erhält und der Impuls nicht "versickert". Geht man von einem solchen Wirkungsmechanismus aus, so ist der therapeutische Erfolg für eine Vielzahl der sogenannten Entmarkungskrankheiten verständlich. Die Unterschiede in den klinischen Bildern sind Ausdruck verschiedener Nervensegmente und den sie inervierenden Organen. Gemeinsame Ursache allerdings ist nach heutigem Kenntnisstand die Demyelinisierung unterschiedlicher, z.T. noch unbekannter Genese.

Zusammenfassend bezieht sich der therapeutische Einsatz von Calcium-2-aminoethyl-phosphat oder der genannten Wirkstoffe auf alle Krankheitsbilder, die mit einer Störung des Reizleitungsmechanismus vergesellschaftet sind, infolge von Markscheidenveränderngen bzw. generelle oder selektive Demyelinisierung. Der Wirkungsmechanismus beruht auf einer speziellen Membranaktivierung durch das Substrat Phosphatidyl-ethanolamin, das ein Strukturelement des Wirkstoffes ist. Durch diese Nervenzellenaffinität des Wirkstoffes werden die metall-abhängigen Membranfunktionen in einer optimalen Weise stimuliert.

Die erfindungsgemäßen Wirkstoffe eignen sich also zur therapeutischen oder prophylaktischen Behandlung insbesondere folgender Neuropathien: diabetoge Neutopathie, alkoholische Polyneuropathie, karzinogene Polyneuropathie, funikuläre Myelose, Neuropathien nach Langzeit-Therapie mit Zytostatika, dysglobulinämische Neuropathie, interstitielle Polyneuropathie, enzephalomyelitis disseminata, akute myelo-optische Neuropathie, enzephalitis periaxialis concentrica, subakut skerotisierende panenzephalitis, altersbedingte, zerebrale Dysfunktionen, wie z.B. der Morbus Alzheimer.

Die Herstellung dieser Wirkstoffe wird am Beispiel des Ca-EAP® nachstehend im einzelnen beschrieben.

Herstellung von Calcium-EAP®

In guter Ausbeute verläuft die Phosphorylierung von 2-Hydroxyethanolamin mit Polyphosphorsäuron. Eine Phosphorsäureamid-Bindung entsteht bei dieser Reaktion nicht. Bei anderen Verfahren können selbst Kondensation und Phosphorylierung gleichermaßen entstehen, wobei bis- und tris- 2-Hydroxy-ethyl -Amine entstehen, aus denen phosphorylierte Hydroxyalkyl-morpholin bzw. -piperazine gebildet werden.

Unter Kühlung vermischt man 2-Hydroxyethylamin mit einem Überschuß an Polyphosphorsäure und erhitzt anschließend langsam auf 100 °C über mehrere Stunden.

Beispiel:

Zu 0,1 mol Polyphosphorsäure gibt man unter Kühlung allmählich 0,2 mol 2-Hydroxyethylamin. Nach Beendigung der Selbsterwärmung wird das Gemisch ca. für 4 Stunden auf 100 ° C erhitzt. Das Reaktionsgemisch wird in Wasser aufgenommen und durch Zugabe eines Erdalkalikarbonats neutralisiert. Das ausgefallene Salz wird abfiltriert und gewaschen; das Filtrat im Vakuum eingedampft. Durch erneutes Auflösen und einen Reinigungsprozeß mit anschließender Konzentrierung wird der freie Phosphorsäure-mono-aminoethylester isoliert.

Phosphorsäure-mono-(2-amino-ethylester) F : 237 ° C

Komplexbildung zum Ca-EAP®

Der nach obiger Vorschrift gewonnene Ester wird in einer alkalischen Lösung gelöst und mit Calciumhydroxid auf pH 10 eingestellt. Nach der Reaktion leitet man bis zur Neutralität Kohlendioxid ein, filtriert Calciumphosphat bzw. Calcium-karbonat und konzentriert das Filtrat durch Verdampfen. Durch Zugabe von Äthanol fällt das gewünschte Produkt aus. Die Ausbeute beträgt ca. 85 %.

Beispiel:

100 g Phosphorsäure-mono-(2-aminoethlester) werden in einer wässrigen Lösung mit 2 g Natriumhydroxid alkalisiert eingetragen. Bei ca. 30 ° C wird in die Vorlage 50 g Calciumhydroxid gegeben und der pH-Wert auf 10 eingestellt. Das Reaktionsgemisch wird auf 50 ° erhitzt und für ca. 20 Minuten zur Reaktion gebracht. Nach dem Abkühlen leitet man zur Neutralisierung des Reaktionsgemisches Kohlendioxid ein und filtriert das ausgefallene Calciumphosphat bzw. Calciumkarbonat ab. Das Filtrat wird eingeengt und zur besseren Ausfällung des Calciumkomplexes werden 100 ml Alkohol hinzugegeben. Auf diese Weise läßt sich das Endprodukt filtrieren. Als Ausbeute werden ca. 100 g erhalten, was einer 88 %igen Ausbeute entspricht.

Analyse

Ca-EAP®
$C_4H_{14}O_8N_2P_2Ca$ MG: 320.2

| | theor. % | ist % |
|---|---|---|
| C | 15,00 | 14,94 |
| H | 4,41 | 4,54 |
| N | 8,75 | 8,82 |
| Ca | 12,52 | 12,30 |

Die anderen erfindungsgemäßen Metallchelate erhält man analog, indem man bei der Komplexbildung statt Calciumhydroxid das jeweilige Metalhydroxid einsetzt und nach der Neutralisation das entsprechende Metallsalz abfiltriert. So erhält man beispielsweise für Magnesium die

Analyse

Mg-EAP

| $C_4H_{14}O_8N_2P_2Mg$ | | MG: 304.42 |
|---|---|---|
| | theor. % | Ist % |
| C | 15.78 | 16.01 |
| H | 4.64 | 4.97 |
| N | 9.20 | 9.47 |
| Mg | 7.98 | 7.66 |

Die therapeutische Wirksamkeit der erfindungsgemäßen Wirkstoffe bei der Behandlung der genannten Neuropathien wird anhand von Ca-EAP® nachstehend erläutert:

Prüfung am Diabetes-Modell:

Der überraschend nachhaltige Einfluß von Calcium-2-aminoethyl-phosphat auf die Nervenleitgeschwindigkeit geht hervor aus dem nachstehend mitgeteilten Ergebnis einer Untersuchung an Streptozotocin-diabetischen Ratten.

Die einmalige Injektion von 70 mg/kg von Streptozotocin zerstört irreversibel die Inselzellen des Pankreas und induziert dadurch eine diabetische Stoffwechsellage, die im weiteren Verlauf von vier bzw. acht Wochen eine periphere Neuropathie nach sich zieht. Diese kann elektrophysiologisch zu diesem Zeitpunkt durch einen Abfall der Nervenleitgeschwindigkeit erfaßt werden.

Auf der Basis dieses Parameters vermindert eine tägliche subcutane Injektion von Calcium-2-aminoethyl-phosphat signifikant den Schweregrad einer sich entwickelnden diabetischen Neuropathie.

Als Parameter zur Erfassung der diabetischen Neuropathie wurden die Reiz-Fortleitungsgeschwindigkeiten (CV) der motorischen und sensorischen Fasern im Nerv des Rattenschwanzes herangezogen. Die experimentelle Methodik folgt derjenigen, die in der Arbeit von Spüler-Dimpfel-Tüllner: "Effect of Gangliosides on Nerve Conduction Velocity during Diabetic Neuropathy in the Rat", veröffentlicht in Archives Internationales de Pharmacodynamie et de Thérapie, Vol. 287, No. 2, Juin 1987, Seiten 211 bis 223 dargelegt ist.

Nach der ersten elektrophysiologischen Messung wurde in einem Teil der Versuchstiere durch Injektion von 70 mg/kg Streptozotocin Diabetes induziert. Vier und acht Wochen nach Induktion des Diabetes erfogten weitere Bestimmungen der CV.

Die Experimente wurden an insgesamt 58 Versuchtieren in drei experimentellen Gruppen durchgeführt:

1. Die Kontrollgruppe mit 14 Tieren (n = 14), die keine Streptozotocin-Injektion erhielten und nicht diabetisch waren.
2. Die 22 Tiere (n = 22) der Calcium-2-aminoethyl-phosphat-Gruppe erhielten vom ersten Diabetestag an täglich eine subcutane Injektion von 20 mg/kg Calcium-2-aminoethyl-phosphat.
3. Die 22 Tiere (n = 22) der diabetischen Placebogruppe erhielten täglich 0,25 ml physiologische Kochsalzlösung.

Die Daten zur Entwicklung der Körpergewichte sowie der täglichen Trinkwassermenge (Tab. 1) dokumentieren den diabetischen Zustand der Tiere in der Calcium-2-aminoethyl-phosphat- und in der Placebo-Gruppe: Die Diabetestiere verlieren im Verlauf von acht Wochen ca. 30 g im.Bezug auf ihr Gewicht nach der Hungerperiode, die Tiere der Kontrollgruppe nehmen um ca. 100 g zu. Die Diabetestiere trinken mehr als die dreifache Wassermenge im Vergleich zu den Kontrolltieren. In diesen allgemeinen metabolischen Parametern tritt kein markanter Unterschied zwischen der Calcium-2-aminoethyl-phosphat-Gruppe und der Placebo-Gruppe in Erscheinung.

Die Messung der CV der motorischen und sensorischen Fasern des Rattenschwanzes ergaben in der ersten Messung am Tag 108 (vor Induktion des Diabetes) sehr gute Übereinstimmung zwischen den Gruppen (Tab. 2a, b, c; jeweils Spalte A), womit eine gute Vergleichbarkeit der später erhobenen Befunde gewährleistet ist. Im proximalen Abschnitt sowohl der motorischen als auch der sensorischen Fasern sowie im distalen Teil der sensorischen Fasern nimmt die CV in der Kontrollgruppe in der Zeit bis zur zweiten

(Tag 141) bzw. zur dritten Messung (Tag 169) deutlich zu (Tab. 2, Spalten D, C). In der diabetischen Placebo-Gruppe dagegen bleibt die CV bis zur zweiten Messung praktisch gleich, erst später wird in Übereinstimmung mit früheren Befunden (a.a.O.) ein leichter Anstieg beobachtet. In der mit Calcium-2-aminoethyl-phosphat behandelten Gruppe liegen alle CV-Werte zwar unter den Werten der Kontrollgruppe, sie sind aber auch deutlich von den Werten der Placebo-Gruppe unterschieden. Dabei reagiert der proximale Abschnitt der motorischen und der sensorischen Fasern deutlich stärker auf die Calcium-2-aminoethyl-phosphat-Behandlung (Differenz zwischen Calcium-2-aminoethyl-phosphat-Gruppe und Placebo-Gruppe: 1,0 bzw. 0,8 und 1,9 bzw. 2,2) als der distale Abschnitt der sensorischen Fasern (0,2 bzw. 0,6).

Eine statistische Bewertung der CV-Meßergebnisse am proximalen Teil des Schwanznervens (Tab. 3a) ergibt:

1. In der Entwicklung der CV in der Zeit von der ersten zur zweiten Messung sowie von der ersten zur letzten Messung unterscheiden sich Kontrollgruppe und Diabetesgruppen hochsignifikant voneinander: In den Diabetesgruppen hat sich eine diabetische Neuropathie entwickelt.

2. Die Entwicklung der CV in der diabetischen Calcium-2-aminoethyl-phosphat-Gruppe in der Zeit von der ersten zur zweiten als auch von der ersten zur letzten Messung unterscheidet sich von derjenigen in der Placebo-Gruppe signifikant: Durch tägliche Gabe von Calcium-2-aminoethyl-phosphat wird der Schweregrad der sich entwickelnden Neurophathie signifikant verringert.

Eine statistische Bewertung der Meßergebnisse unter Einschluß auch des weniger sensitiven Parameters der CV im distalen Abschnitt der sensorischen Fasern ergibt im Prinzip das gleiche Bild, nur ist der Unterschied zwischen der Calcium-2-aminoethyl-phosphat-Gruppe und der Placebo-Gruppe bezüglich der Entwicklung von der ersten zur zweiten Messung nur mit $p < 0,1$ signifikant, bezüglich der Entwicklung von der ersten zur dritten Messung jedoch wieder mit $p < 0,05$.

Damit ist nachgewiesen, daß die tägliche Applikation von Calcium-2-aminoethyl-phosphat den Schweregrad einer sich entwickelnden diabetischen Neuropathie vermindert.

Tabelle 1:

A: Durchschnittsgewicht + S.E.M. (g) vor und nach dem Fasten und an den Tagen der zweiten und dritten Messung.

| Gruppe | n | Tag 110 vor dem Fasten | Tag 113 nach dem Fasten | Tag 141 2. Messung | Tag 169 3. Messung |
|---|---|---|---|---|---|
| Kontroll | 14 | 262.4 +3.3 | 235.7 +2.7 | 309.4 +3.5 | 336.6 +4.4 |
| Ca-2-aminoethyl-phosphat | 22 | 265.4 +3.1 | 236.4 +2.9 | 219.7 +3.7 | 207.6 +4.1 |
| Placebo | 22 | 263.8 +2.5 | 236.3 +1.9 | 216.7 +2.6 | 199.2 +3.0 |

B: Mittlere tägliche Wasseraufnahme (ml) der Tiere der Kontrollgruppe sowie der beiden Diabetergruppen. S.E.M. nicht ermittelt, da die Tiere in Gruppenkäfigen gehalten wurden.

| Gruppe | Tage 116 bis 129 | Tage 130 bis 143 | Tage 144 bis 157 | Tage 158 bis 169 |
|---|---|---|---|---|
| Kontroll | 20.7 | 16.8 | 17.1 | 18.0 |
| Ca-2-aminoethyl-phosphat | 64.8 | 62.3 | 64.9 | 62.2 |
| Placebo | 61.9 | 62.6 | 65.9 | 64.3 |

Tabelle 2:

A: Fortleitungsgeschwindigkeit (m/s) des proximalen Abschnitts der motorischen Nerven

| Gruppe | A Tag 108 | B Tag 141 | C Tag 169 | D (B-A) | E (C-A) |
|---|---|---|---|---|---|
| Kontroll | 29.8 +0.6 | 34.0 +0.6 | 35.2 +0.5 | +4.2 +1.0 | +5.5 +0.8 |
| Ca-2-aminoethyl-phosphat | 30.2 +0.4 | 31.4 +0.7 | 33.2 +0.7 | +1.1 +0.5 | +3.0 +0.6 |
| Placebo | 29.4 +0.3 | 29.5 +0.7 | 31.6 +0.6 | +0.1 +0.7 | +2.2 +0.7 |

B: Fortleitungsgeschwindigkeit (m/s) des proximalen Abschnitts der sensorischen Nerven

| Gruppe | A Tag 108 | B Tag 141 | C Tag 169 | D (B-A) | E (C-A) |
|---|---|---|---|---|---|
| Kontroll | 38.4 +0.4 | 42.6 +0.5 | 45.0 +0.5 | +4.3 +0.4 | +6.6 +0.5 |
| Ca-2-aminoethyl-phosphat | 38.5 +0.5 | 40.9 +0.5 | 42.2 +0.4 | +2.3 +0.6 | +3.7 +0.6 |
| Placebo | 38.7 +0.3 | 39.1 +0.5 | 40.2 +0.6 | +0.4 +0.5 | +1.5 +0.6 |

C: Fortleitungsgeschwindigkeit (m/s) des distalen Abschnitts der sensorischen Nerven

| Gruppe | A<br>Tag 108 | B<br>Tag 141 | C<br>Tag 169 | D<br>(B-A) | E<br>(C-A) |
|---|---|---|---|---|---|
| Kontroll | 33.8 +0.5 | 36.0 +0.5 | 37.9 +0.4 | +2.2 +0.4 | +4.1 +0.5 |
| Ca-2-aminoethyl phosphat | 33.5 +0.4 | 33.4 +0.5 | 34.4 +0.5 | -0.1 +0.6 | +0.8 +0.5 |
| Placebo | 33.4 +0.4 | 33.1 +0.5 | 33.7 +0.4 | -0.3 +0.4 | +0.2 +0.5 |

**Tabelle 3:**

Bivarianter F-Test mit 3 experimentellen Gruppen.

F-Werte wurden auf der Basis der individuellen Entwicklung von CV des proximalen Abschnittes des motorischen und sensorischen Nervs berechnet.

| Vergleichsgruppen | Tag 108 bis 141 | Tag 108 bis 169 |
|---|---|---|
| Kontroll ./. Ca-2-aminoethyl-phosphat | 5.31 | 6.23 |
| -/. Placebo | 14.30 | 16.73 |
| Placebo ./. Ca-2-aminoethyl-phosphat | 3.62 | 3.69 |

Freiheitsgrade: df 1 = 2 und df 2 = 54. F-Werte $> 3,23$ entsprechen $p < 0,05$ und F-Werte $> 5,18$ entsprechen $p < 0,01$.

## Patentansprüche

Die Dosierung von Ca-EAP® unterscheidet sich von Fall zu Fall und auch vom klinischen Bild des Patienten. Folgende Dosierung hat sich bewährt: als Lanzeittherapie wird eine orale Substitution von täglich 2 x 2 Dragees (jedes Dragee hat 350 mg und enthält 43,82 mg Calcium sowie übliche galenische

Hilfsstoffe) und eine parenterale Applikation von 3 Ampullen (jede Ampulle hat 10 ml und enthält 50,08 mg Calcium) verteilt über eine Woche, vorzugsweise montags, mittwochs und freitags, verabreicht. Je nach Schweregrad der Symptome kann die Dosierung verdreifacht werden, wobei eine klinisch-chemische Kontrolle angezeigt ist. Die hohe Dosierung sollte nur über 2 Wochen erfolgen, wonach-dann die erstgenannte Langzeittherapie-Empfehlung zur Anwendung kommen soll.

**1.** Verfahren zur Herstellung eines Metallchelats der Ethanolaminophosphorsäure mit der Strukturformel

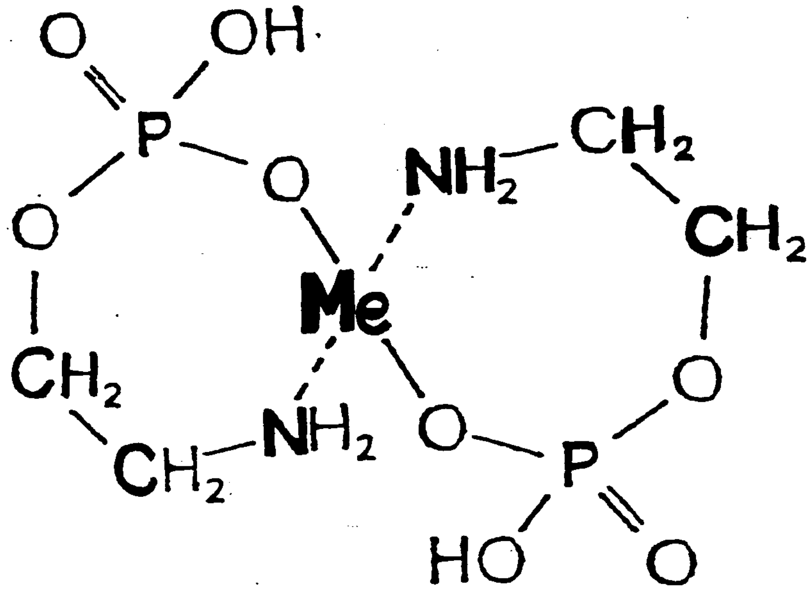

in welcher Me das Kation eines Erdalkali- oder Übergangsmetalls bezeichnet, ausgewählt aus der Gruppe Calcium, Magnesium, Zink, Kupfer, Eisen und Mangan, dadurch gekennzeichnet, daß man 2-Hydroxyethylamin mit einem Überschuß an Polyphosphorsäure vermischt, das Gemisch langsam auf 100 °C über mehrere Stunden erhitzt, einer alkalischen Lösung des gewonnenen Esters das Metallhydroxid zusetzt und auf pH 10 einstellt, anschließend Kohlendioxid einleitet und das Metallkarbonat bzw. Metallphosphat filtriert.

**2.** Verfahren nach Anspruch 1, dadurch gekennzeichnet, daß als Metallhydroxid Calciumhydroxid eingesetzt und Calciumcarbonat bzw. Calciumphosphat filtriert und das Calciumchelat mit Ethanol aus dem Filtrat ausgefällt wird.

**3.** Verfahren nach Anspruch 1, dadurch gekennzeichnet, daß als Metallhydroxid Magnesiumhydroxid eingesetzt und Magnesiumcarbonat bzw. Magnesiumphosphat filtriert und das Magnesiumchelat mit Ethanol aus dem Filtrat ausgefällt wird.

4. Arzneimittel,enthaltend ein Metallchelat der Ethanolaminophosphorsäure mit der Strukturformel

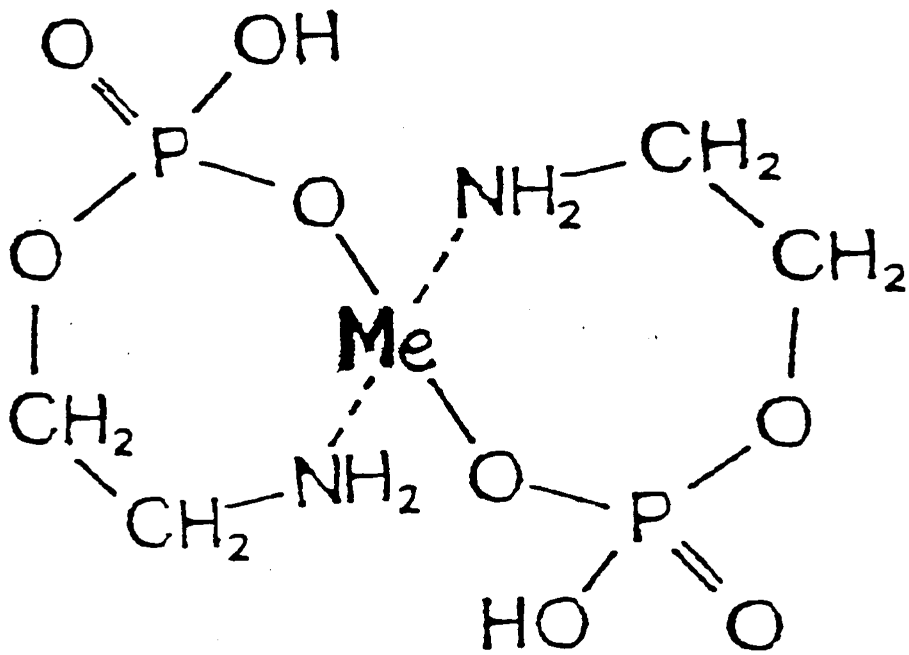

in welcher Me ein Erdalkali- oder Übergangsmetall kation bezeichnet, ausgewählt aus der Gruppe Magnesium, Zink, Kupfer, Eisen und Mangan.

5. Verwendung eines Metallchelats mit der in Anspruch 1 angegebenen Strukturformel zur Herstellung eines Arzneimittels zur prophylaktischen oder therapeutischen Behandlung von Neuropathien.

6. Verwendung nach Anspruch 5 zur Behandlung der diabetogenen Neuropathie.

7. Verwendung nach Anspruch 5 zur Behandlung der alkoholischen Polyneuropathie.

8. Verwendung nach Anspruch 5 zur Behandlung der karzinogenen Polyneuropathie.

9. Verwendung nach Anspruch 5 zur Behandlung der funikulärenn Myelose.

10. Verwendung nach Anspruch 5 zur Behandlung von Neuropathien nach Langzeit-Therapie mit Zytostatika.

11. Verwendung nach Anspruch 5 zur Behandlung von dysglobulinämischen Neuropathie.

12. Verwendung nach Anspruch 5 zur Behandlung von interstitiellen Polyneuropathie.

13. Verwendung nach Anspruch 5 zur Behandlung der enzephalomyelitis disseminata.

14. Verwendung nach Anspruch 5 zur Behandlung der akuten myelo-optischen Neuropathie.

15. Verwendung nach Anspruch 5 zur Behandlung der enzephalitis periaxialis concentrica.

16. Verwendung nach Anspruch 5 zur Behandlung der subakut sklerotisierenden panenzephalitis.

17. Verwendung nach Anspruch 5 zur Behandlung altersbedingter, zerebraler Dysfunktionen, wie z.B. dem Morbus Alzheimer.

## Claims

1. A process for preparing a metal chelate of ethaolaminopbosphoric acid with the structural formula:

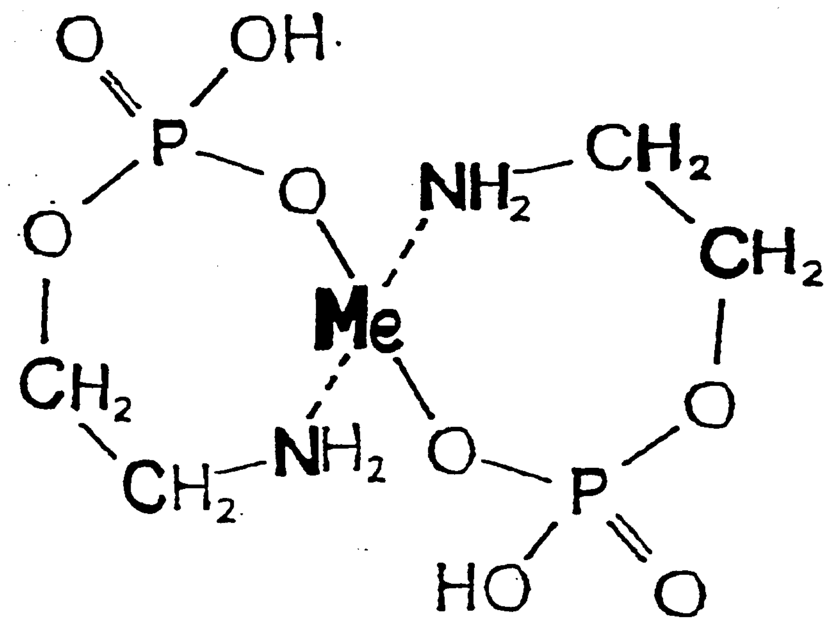

in which Me represents the cation of an alkaline-earth or transition metal selected from the group of calcium, magnesium, zinc, copper, iron ad manganese, **characterized in that** 2-hydroxyethylamine is mixed with a excess of polyphosphoric acid, the mixture is slowly heated to 100 °C over several hours, the metal hydroxide is added to an alkaline solution of the ester obtained and the pH is adjusted to pH 10, then carbon dioxide is introduced and the metal carbonate or metal phosphate is filtered.

2. A process according to Claim 1, **characterized in that** calcium hydroxide is used as the metal hydroxide ad calcium carbonate or calcium phosphate is filtered and the calcium chelate is precipitated from the filtrate with ethanol.

3. A process according to Claim 1, **characterized in that** magnesium hydroxide is used as the metal hydroxide ad magnesium carbonate or magnesium phosphate is filtered and the magnesium chelate is precipitated from the filtrate with ethanol.

4. A medicament containing a metal chelate of ethanolaminophosphoric acid with the structural formula:

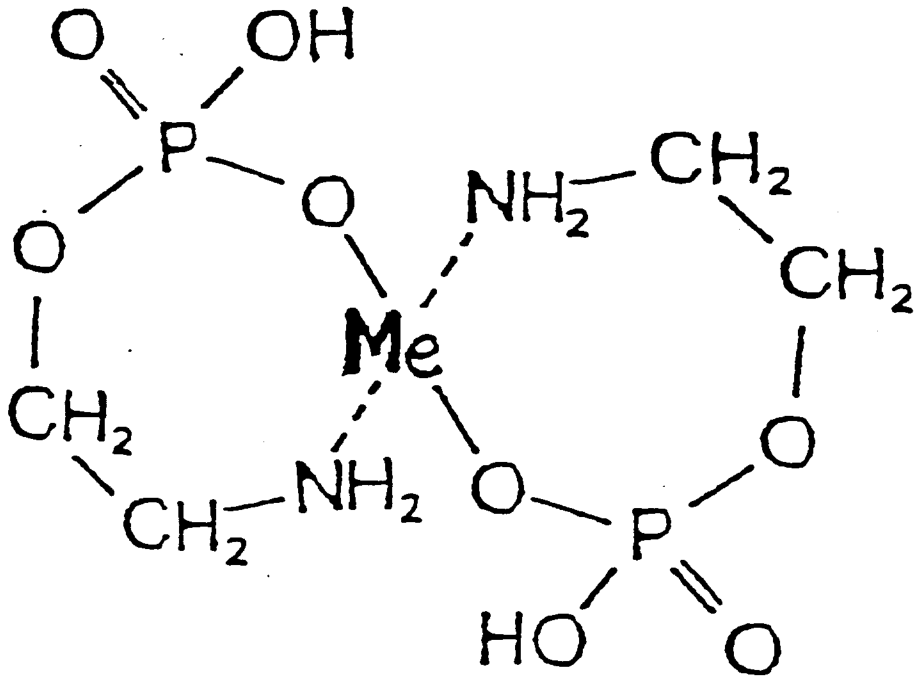

in which Me represents the cation of an alkaline-earth or transition metal selected from the group of magnesium, zinc, copper, iron ad manganese.

5. Use of a metal chelate with the structural formula set out in Claim 1 for preparing a medicament for the prophylactic or therapeutic treatment of neuropathies.

6. Use according to claim 5 for the treatment of diabetogenic neuropathy.

7. Use according to Claim 5 for the treatment of alcoholic polyneuropathy.

8. Use according to Claim 5 for the treatment of carcinogenic polyneuropathy.

9. Use according to Claim 5 for the treatment of funicular myelosis.

10. Use according to Claim 5 for the treatment of neuropathies in accordance with long-term therapy with cytostatics.

11. Use according to Claim 5 for the treatment of dysglobulinaemic neuropathy.

12. Use according to Claim 5 for the treatment of intersticial polyneuropathy.

13. Use according to Claim 5 for the treatment of encephalomyelitis disseminata.

14. Use according to Claim 5 for the treatment of actue myelo-optical neuropathy.

15. Use according to Claim 5 for the treatment of encephalitis periaxialis concentrica.

16. Use according to Claim 5 for the treatment of suhacutely sclerotizing panencephalitis.

17. Use according to Claim 5 for the treatment of cerebral dysfunctions caused by old age, such as for example Alzheimer's disease.

## Revendications

1. Procédé pour la fabrication d'un chélateur de métal de l'acide éthanolaminophosphorique avec la formule de constitution

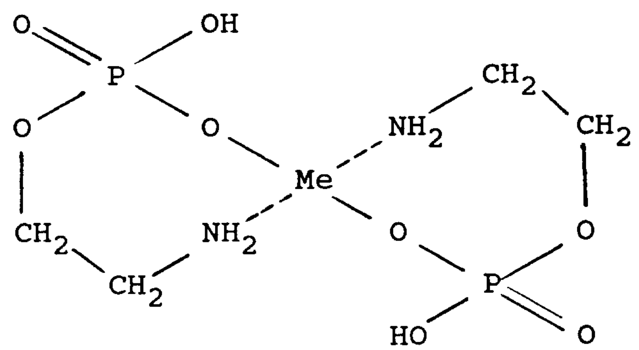

dans laquelle Me désigne le cation d'un métal alcalino-terreux ou de transition, choisi dans le groupe calcium, magnésium, zinc, cuivre, fer et manganèse, caractérisé en ce qu'on mélange du 2-hydroxyéthylamine avec un excès d'acide polyphosphorique, on chauffe lentement le mélange à 100 °C pendant plusieurs heures, on ajoute l'hydroxyde de métal à une solution alcaline de l'ester obtenu et on la règle au pH 10, on introduit ensuite du dioxyde de carbone et on filtre le carbonate de métal, respectivement le phosphate de métal.

2. Procéde selon la revendication 1, caractérisé en ce que de l'hydroxyde de calcium est utilisé comme hydroxyde de métal et du carbonate de calcium, respectivement du phosphate de calcium est filtré et le chélateur de calcium est précipité avec de l'éthanol à partir du filtrat.

3. Procédé selon la revendication 1, caractérisé en ce que de l'hydroxyde de magnésium est utilisé comme hydroxyde de métal et du carbonate de magnésium, respectivement du phosphate de magnésium, est filtré et le chélateur de magnésium est précipité avec de l'éthanol à partir du filtrat.

4. Médicament contenant un chélateur de métal de l'acide éthanolaminophosphorique avec la formule de constitution

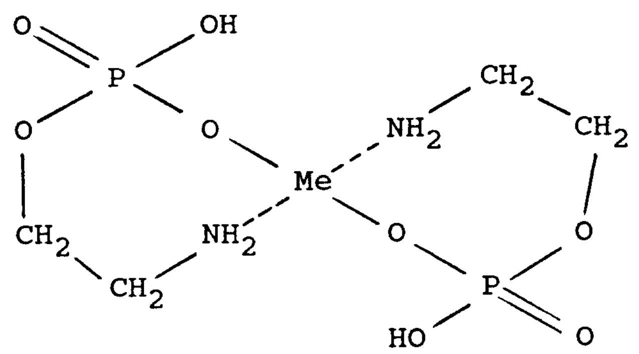

dans laquelle Me désigne un cation d'un métal alcalino-terreux ou de transition, choisi dans le groupe magnésium, zinc, cuivre, fer et manganèse.

5. Utilisation d'un chélateur de métal avec la formule de constitution indiquée dans la revendication 1 pour la fabrication d'un médicament pour le traitement prophylactique ou thérapeutique de neuropathies.

6. Utilisation selon la revendication 5 pour le traitement de la neuropathie diabétogène.

7. Utilisation selon la revendication 5 pour le traitement de la polyneuropathie alcoolique.

**8.** Utilisation selon la revendication 5 pour le traitement de la polyneuropathie carcinogène.

**9.** Utilisation selon la revendication 5 pour le traitement de la myélite funiculaire.

**10.** Utilisation selon la revendication 5 pour le traitement de neuropathies après thérapie de longue durée avec des zytostatiques.

**11.** Utilisation selon la revendication 5 pour le traitement de neuropathie dysglobulinémique.

**12.** Utilisation selon la revendication 5 pour le traitement de polyneuropathie interstitielle.

**13.** Utilisation selon la revendication 5 pour le traitement de l'encéphalo-myélite disséminée.

**14.** Utilisation selon la revendication 5 pour le traitement de la neuropathie myélo-optique aiguë.

**15.** Utilisation selon la revendication 5 pour le traitement de l'encéphalite périaxiale concentrique.

**16.** Utilisation selon la revendication 5 pour le traitement de la panencéphalite sclérosante subaigüe.

**17.** Utilisation selon la revendication 5 pour le traitement de troubles fonctionnels cérébraux dus à l'âge, comme par exemple la maladie d'Alzheimer.